# EUROPEAN PATENT APPLICATION

(11) **EP 4 582 831 A1**
(43) Date of publication of application: **09.07.2025**
(21) Application number: 23860433.4
(22) Date of filing: 30.08.2023
(51) Int. Cl.: G01S 7/03, G01S 7/02, G01S 13/931, H01Q 1/38, H01Q 1/42, H01Q 13/02, H01Q 13/08, H01Q 13/10, H01Q 15/14, H01Q 17/00

(54) **RADAR DEVICE AND VEHICLE-MOUNTED SENSING SYSTEM**

(30) Priority: 31.08.2022 JP 2022138722; 01.11.2022 JP 2022175728
(71) Applicant: Sony Group Corporation, Tokyo 108-0075 (JP); Sony Semiconductor Solutions Corporation, Atsugi-shi, Kanagawa 243-0014 (JP)
(72) Inventor: KATSUTA Atsushi, Tokyo 108-0075 (JP); OKADA Yasuhiro, Atsugi-shi, Kanagawa 243-0014 (JP); TAKAHASHI Yudai, Atsugi-shi, Kanagawa 243-0014 (JP); YOKOYAMA Hiroki, Tokyo 108-0075 (JP)
(74) Representative: Witte, Weller & Partner Patentanwälte mbB
(86) International application number: PCT/JP2023/031595
(87) International publication number: WO 2024/048671

(57) **Abstract**

Provided are a radar apparatus that can prevent the leakage of interference waves from a radome, and an on-vehicle sensing system including the radar apparatus.

[Solving Means]

The radar apparatus of the present disclosure includes a substrate having an antenna structure in which a radiating portion for a radio wave is provided on a first surface, a radome disposed to face the first surface of the substrate, and a radio wave absorbing member disposed between the substrate and the radome, having an opening formed in a portion corresponding to the radiating portion, and including an insulator configured to absorb a radio wave.

## Description

### [Technical Field]

The present disclosure relates to a radar apparatus and an on-vehicle sensing system.

### [Background Art]

A radome is used to protect the antenna of a radar apparatus from external impact, dirt, and the like. For example, a radio wave radiating portion is provided on one of the surfaces of a substrate having an antenna structure, and a radome is disposed to face this surface. In this case, ideally, radio waves radiated from the radiating portion propagate in a substantially vertical direction within the radome and pass through the interface between the radome and the external air layer, to be radiated toward the outside.

However, in reality, there are radio waves that propagate in unintended directions within the radome, and these radio waves sometimes leak out from the radome as interference waves. Such interference waves cause a deterioration of the directivity of the antenna.

PTL 1 describes an invention of a radar apparatus in which an EMI shield is disposed between a substrate having an antenna structure and a radome. However, depending on the EMI shield, the leakage of interference waves from the radome cannot be prevented.

### [Citation List]

### [Patent Literature]

[PTL 1]
PCT Patent Publication No. WO2017/501371

### [Summary]

### [Technical Problem]

The present disclosure aims to solve the problem described above, and it is an object thereof to provide a radar apparatus that can prevent the leakage of interference waves from a radome, and an on-vehicle sensing system including the radar apparatus.

### [Solution to Problem]

In order to solve the problem described above, a radar apparatus according to the present disclosure includes a metal member including a substrate having a radiating portion for a radio wave provided on a first surface, a radome disposed to face the first surface of the substrate, and a radio wave absorbing member disposed between the substrate and the radome, having an opening formed in a portion corresponding to the radiating portion, and including an insulator configured to absorb a radio wave.

Further, an on-vehicle sensing system according to the present disclosure includes a radar apparatus including a substrate having an antenna structure in which a radiating portion for a radio wave is provided on a first surface, a radome disposed to face the first surface of the substrate, and a radio wave absorbing member disposed between the substrate and the radome, having an opening formed in a portion corresponding to the radiating portion, and including an insulator configured to absorb a radio wave, an object recognition processing apparatus configured to perform object recognition processing on the basis of output of the radar apparatus, and a vehicle control apparatus configured to control a vehicle on the basis of a recognition result of the object recognition processing apparatus.

### [Brief Description of Drawings]

[FIG. 1]

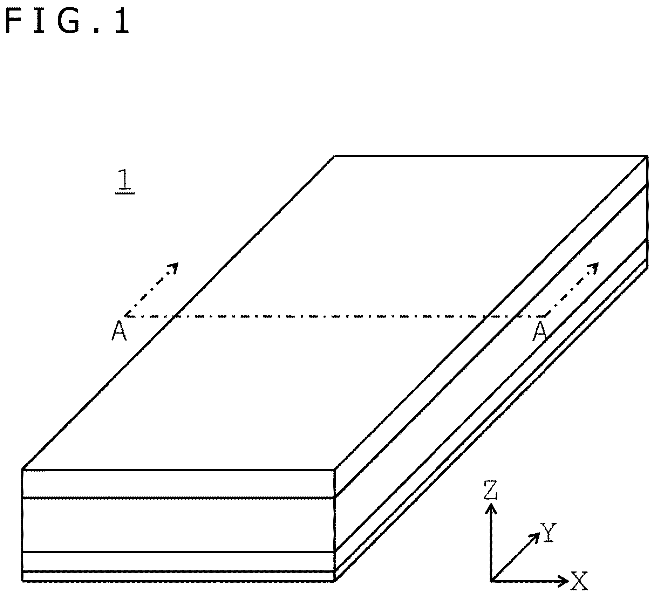

   FIG. 1 is a view illustrating the appearance of an antenna of a radar apparatus according to Embodiment 1.
[FIG. 2]

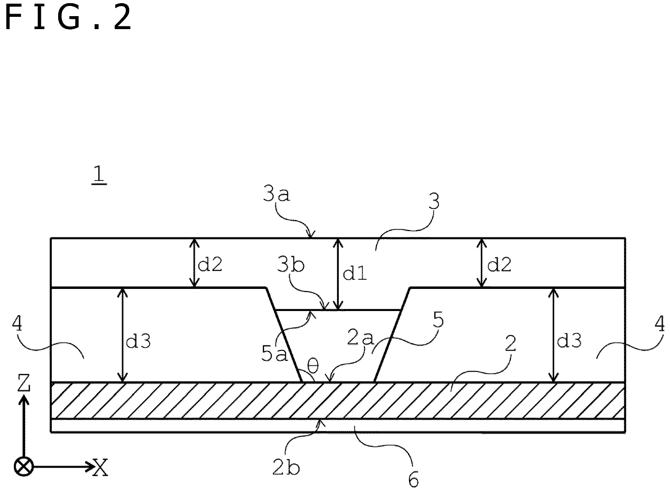

   FIG. 2 is a sectional view taken along the line A-A of FIG. 1.
[FIG. 3A]

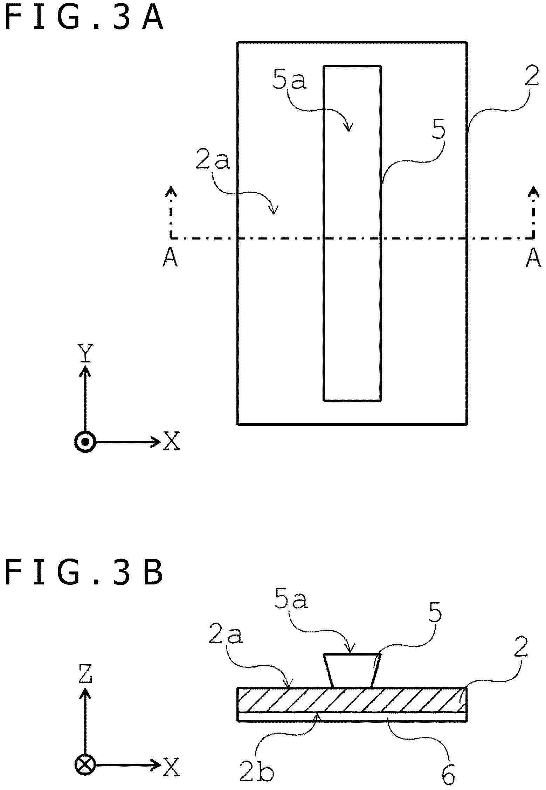

   FIG. 3A is a top view of a metal member according to Embodiment 1.
[FIG. 3B]
   FIG. 3B is a sectional view taken along the line A-A of FIG. 3A.
[FIG. 4A]

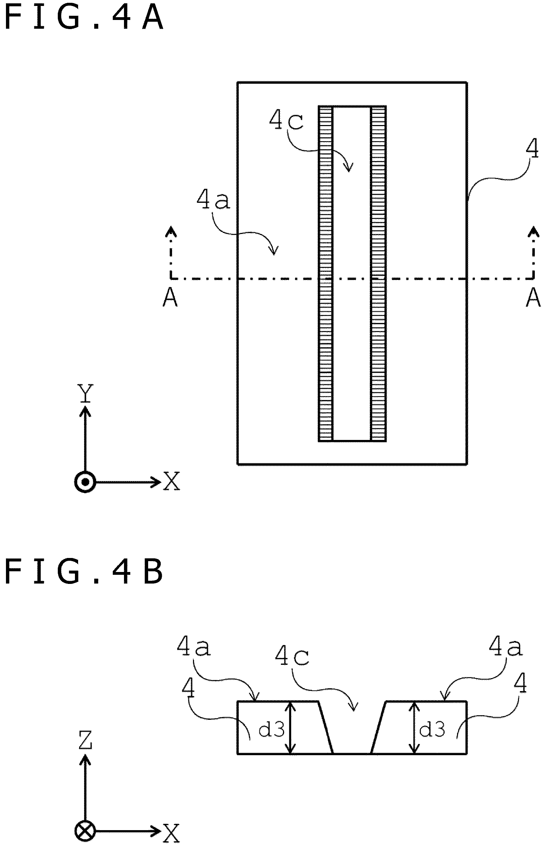

   FIG. 4A is a top view of a radio wave absorbing member according to Embodiment 1.
[FIG. 4B]
   FIG. 4B is a sectional view taken along the line A-A of FIG. 4A.
[FIG. 5]

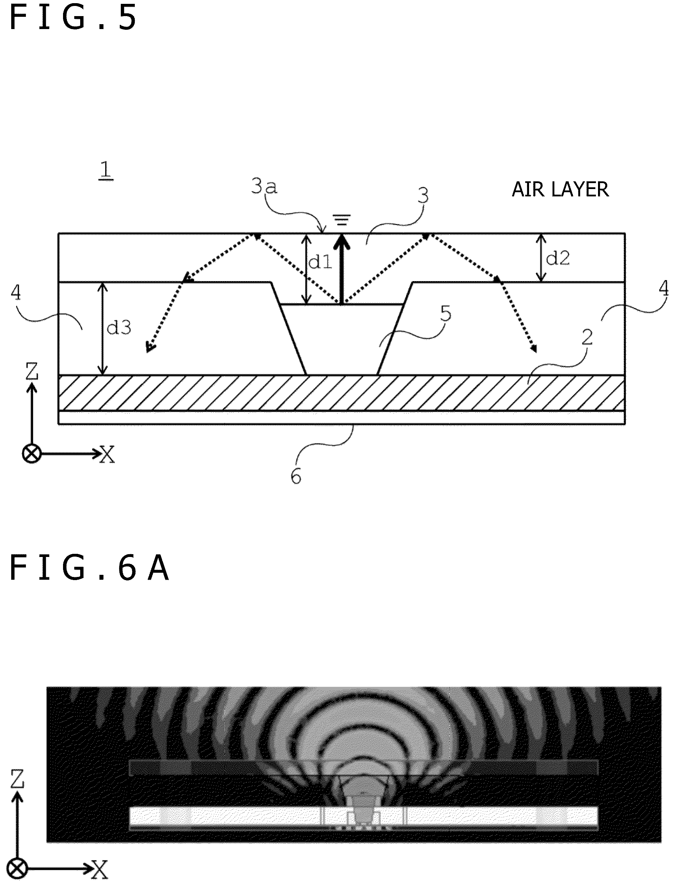

   FIG. 5 is a diagram illustrating the action of the radar apparatus according to Embodiment 1.
[FIG. 6A]
   FIG. 6A is a diagram illustrating the result of the electromagnetic field analysis of the radar apparatus according to Embodiment 1.
[FIG. 6B]

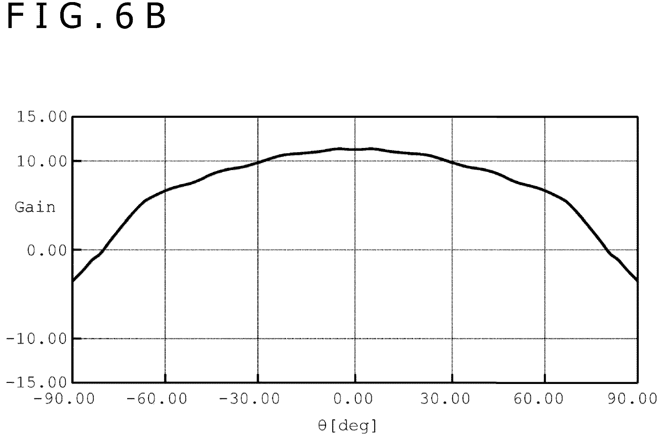

   FIG. 6B is a diagram illustrating the directivity of the radar apparatus according to Embodiment 1.
[FIG. 7]

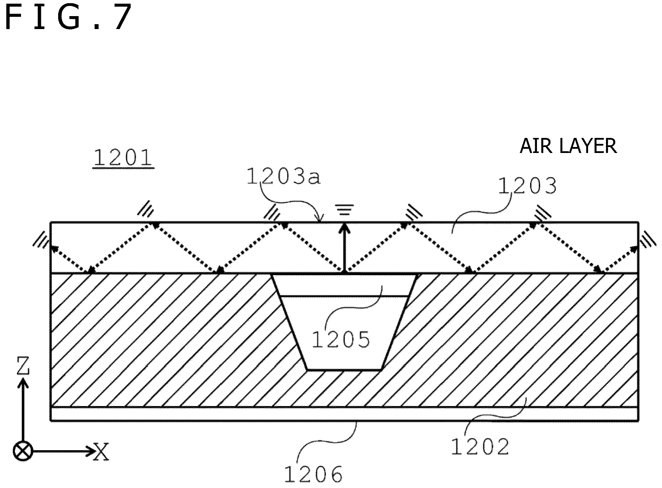

   FIG. 7 is a diagram illustrating the action of a radar apparatus according to a related art.
[FIG. 8A]

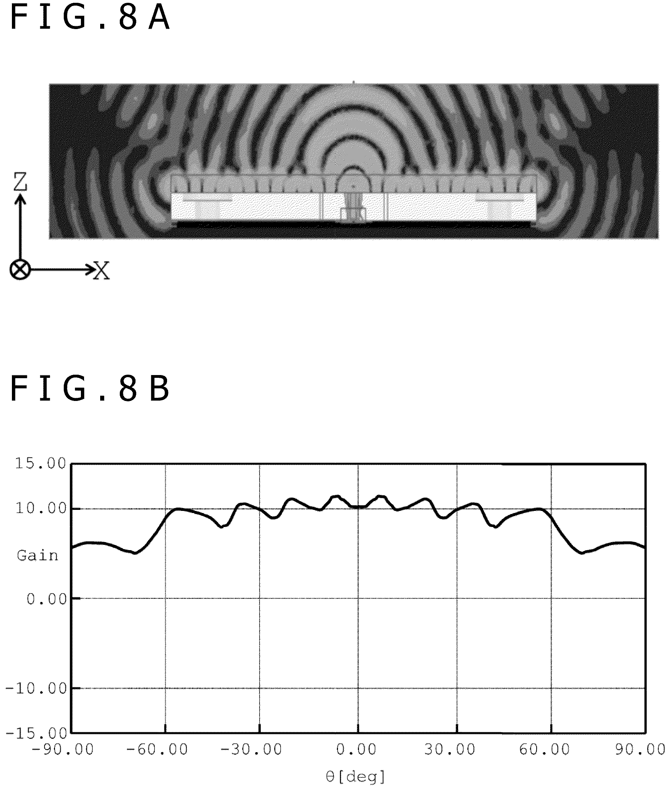

   FIG. 8A is a diagram illustrating the result of the electromagnetic field analysis of the radar apparatus according to the related art.
[FIG. 8B]
   FIG. 8B is a diagram illustrating the directivity of the radar apparatus according to the related art.
[FIG. 9]

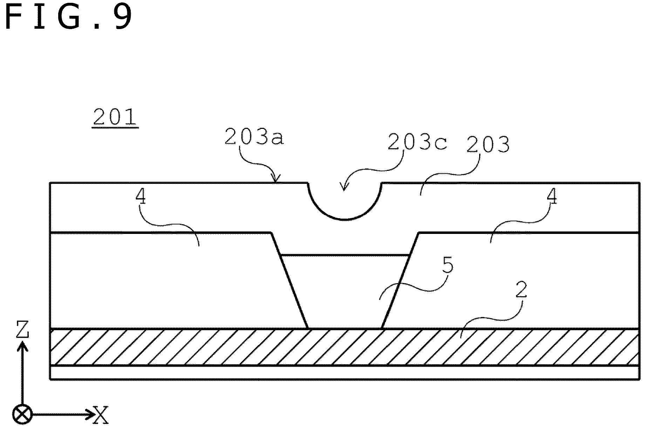

   FIG. 9 is a sectional view of a radar apparatus according to Embodiment 2.
[FIG. 10]

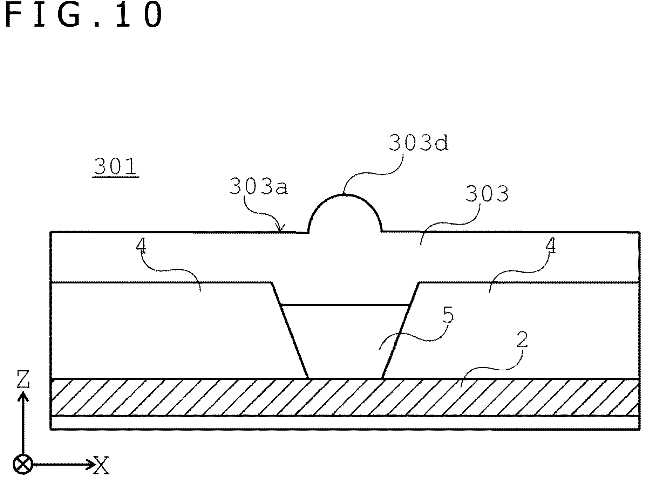

   FIG. 10 is a sectional view of a radar apparatus according to Embodiment 3.
[FIG. 11]

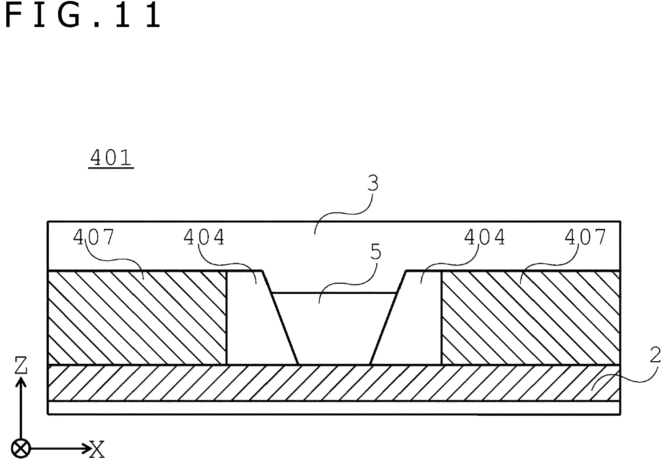

   FIG. 11 is a sectional view of a radar apparatus according to Embodiment 4.
[FIG. 12A]

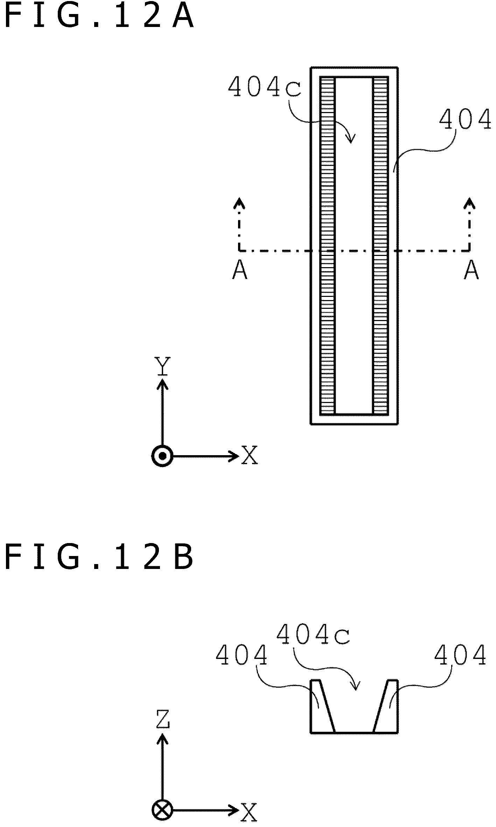

   FIG. 12A is a top view of a radio wave absorbing member according to Embodiment 4.
[FIG. 12B]
   FIG. 12B is a sectional view taken along the line A-A of FIG. 12A.
[FIG. 13A]

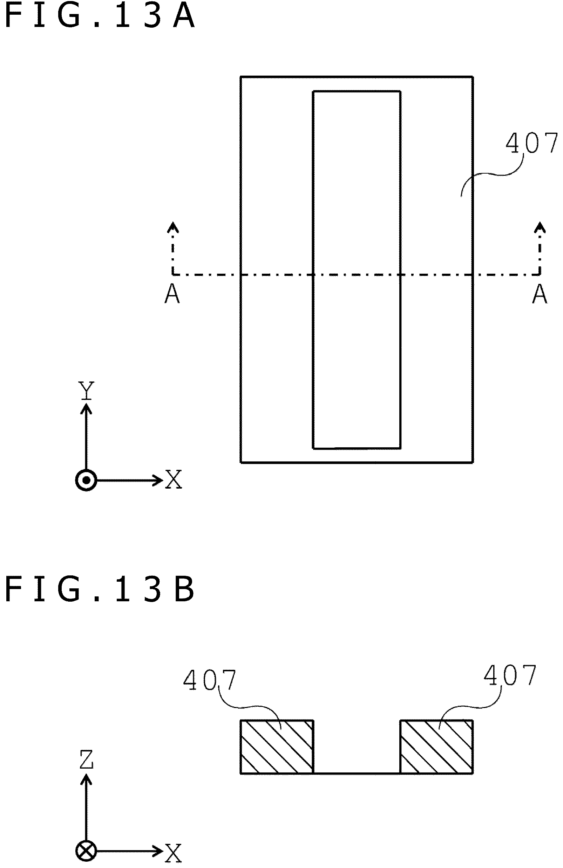

   FIG. 13A is a top view of a cushioning member according to Embodiment 4.
[FIG. 13B]
   FIG. 13B is a sectional view taken along the line A-A of FIG. 13A.
[FIG. 14]

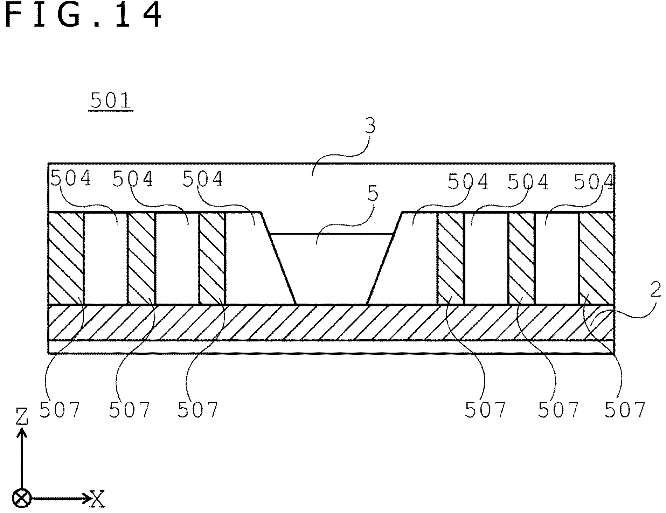

   FIG. 14 is a sectional view of a radar apparatus according to Embodiment 5.
[FIG. 15]

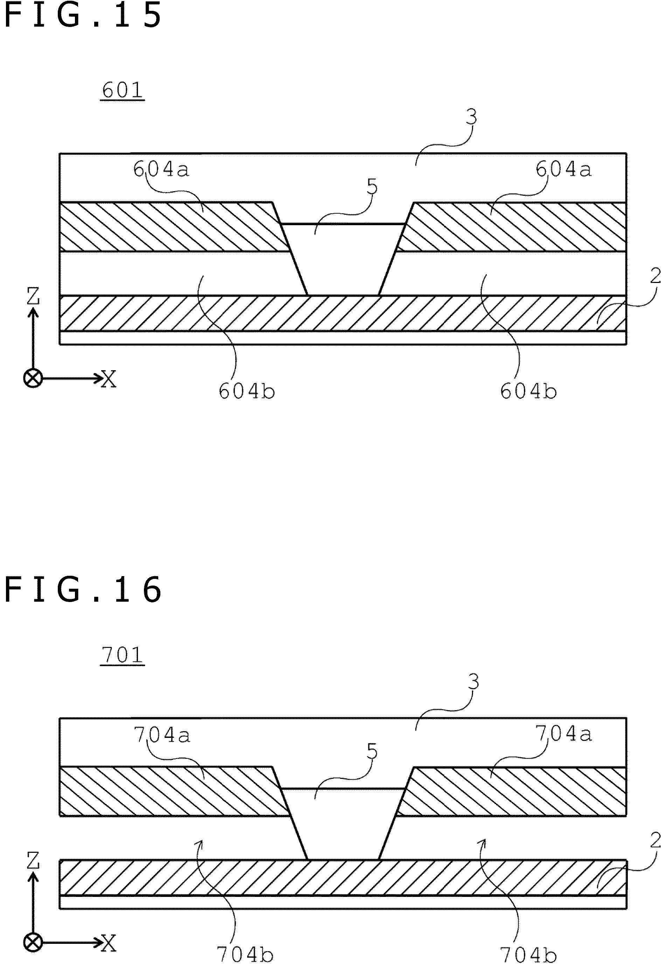

   FIG. 15 is a sectional view of a radar apparatus according to Embodiment 6.
[FIG. 16]
   FIG. 16 is a sectional view of a radar apparatus according to Embodiment 7.
[FIG. 17]

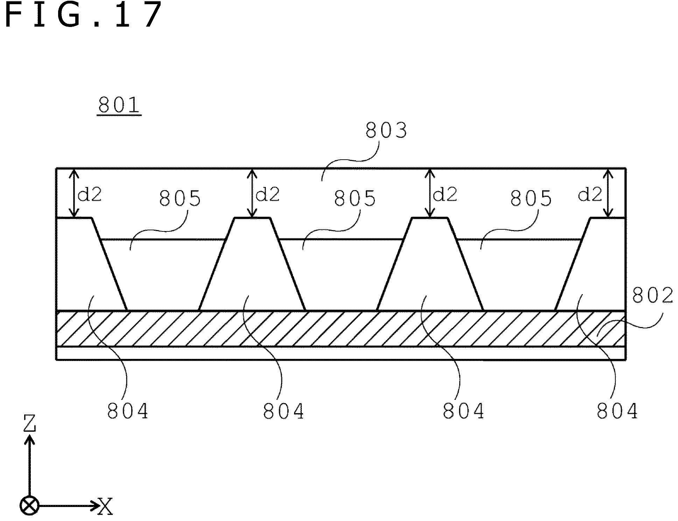

   FIG. 17 is a sectional view of a radar apparatus according to Embodiment 8.
[FIG. 18]

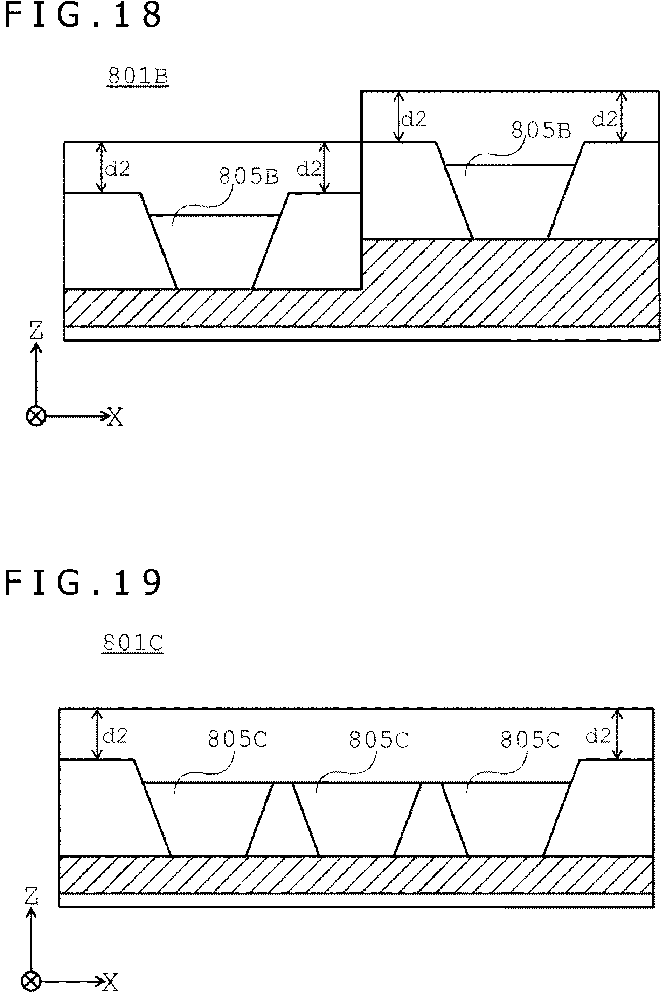

   FIG. 18 is a sectional view of a first variation of the radar apparatus according to Embodiment 8.
[FIG. 19]
   FIG. 19 is a sectional view of a second variation of the radar apparatus according to Embodiment 8.
[FIG. 20]

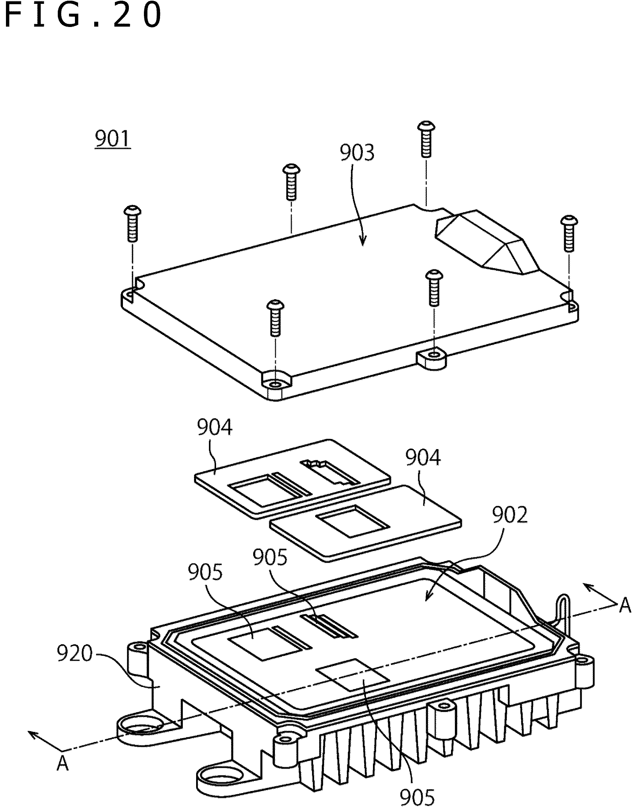

   FIG. 20 is an exploded view of an antenna of a radar apparatus according to Embodiment 9.
[FIG. 21]

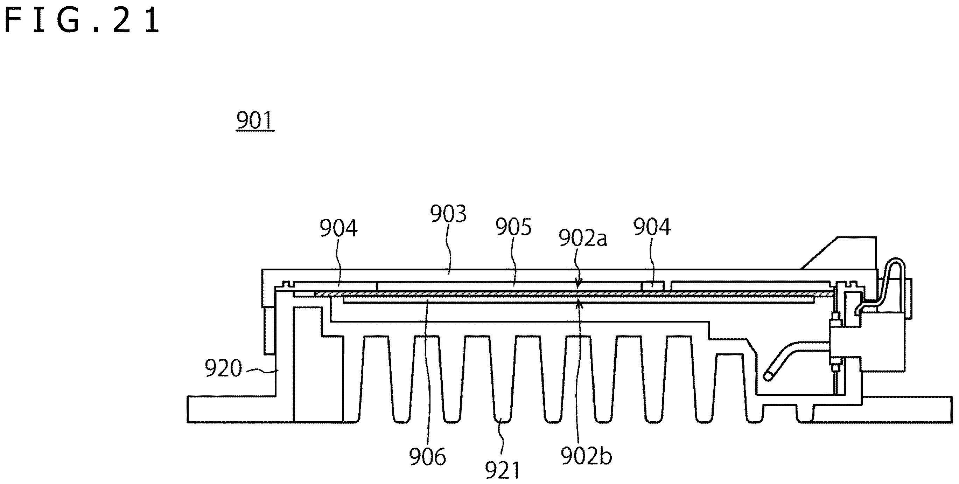

   FIG. 21 is a sectional view taken along the line A-A of FIG. 20.
[FIG. 22]

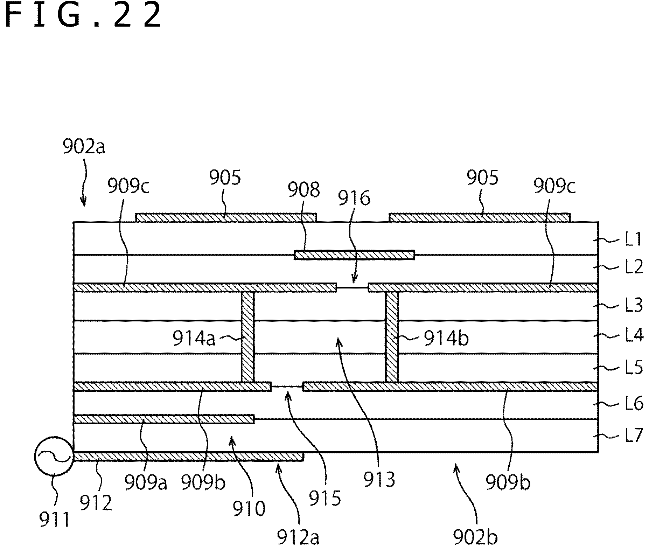

   FIG. 22 is a sectional view of a dielectric substrate according to Embodiment 9.
[FIG. 23]

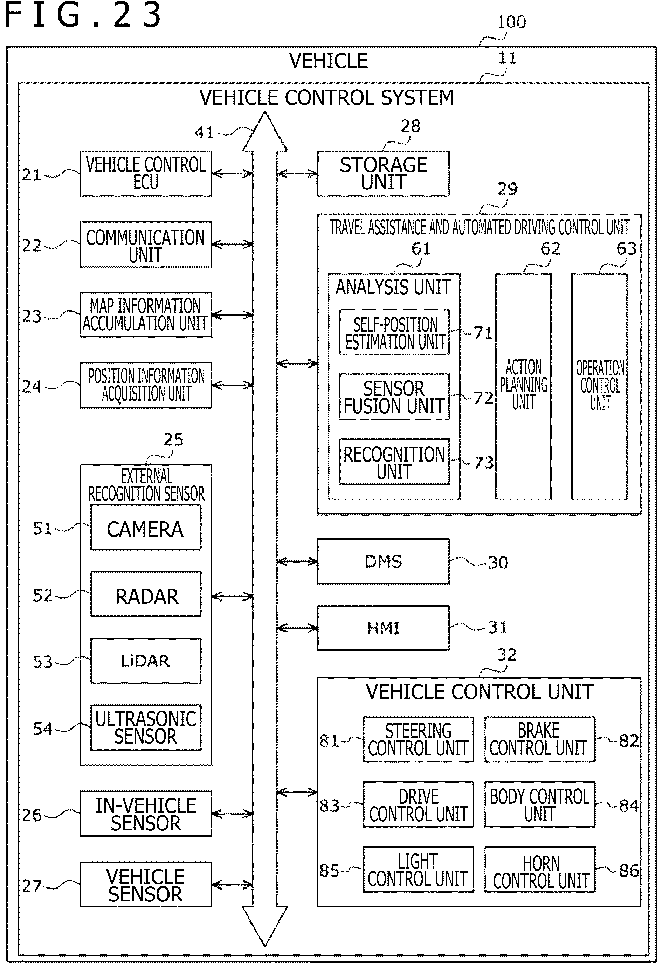

   FIG. 23 is a block diagram illustrating a configuration example of a vehicle control system.
[FIG. 24]

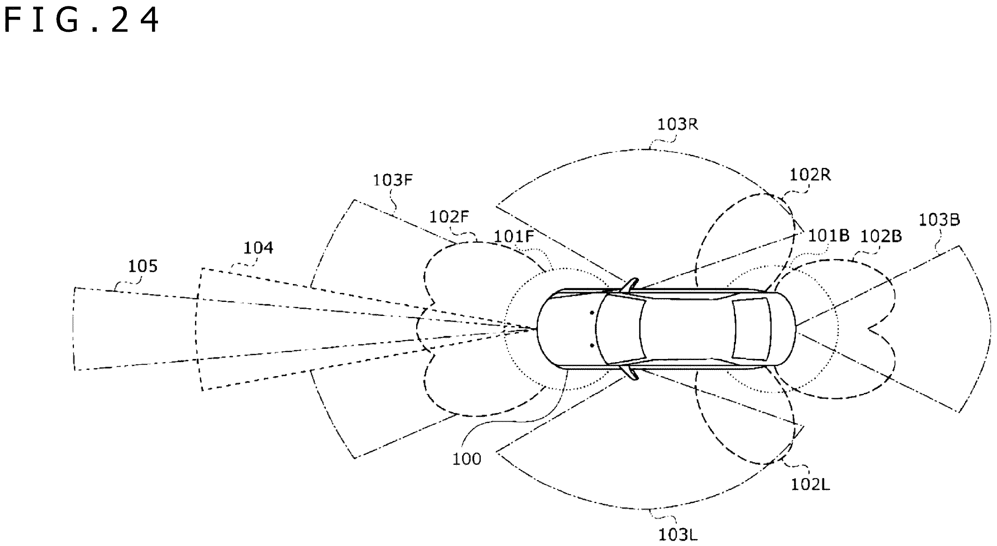

   FIG. 24 is a view illustrating examples of sensing areas.

### [Description of Embodiments]

In the following, embodiments of the present disclosure are described with reference to the drawings. In the drawings, the same or corresponding elements are denoted by the same reference signs, and the detailed descriptions are omitted as appropriate.

### [Embodiment 1]

FIG. 1 is a view illustrating the appearance of an antenna 1 of a radar apparatus according to Embodiment 1 of the present disclosure. FIG. 2 is a sectional view taken along the line A-A of FIG. 1. The antenna 1 includes a flat plate-like metal member (substrate) 2 having an antenna structure, a radome 3 disposed to face a first surface 2a of the metal member 2, and a radio wave absorbing member 4 disposed between the metal member 2 and the radome 3.

FIG. 3A is a top view of the metal member 2. FIG. 3B is a sectional view taken along the line A-A of FIG. 3A. A radiating portion 5 configured to radiate radio waves is provided on the first surface 2a of the metal member 2. The types of radio waves radiated from the radiating portion 5 are not particularly limited, and include, as an example, millimeter waves used in on-vehicle radars and the like. A circuit board 6 on which electronic components and the like are disposed is disposed on a second surface 2b of the metal member 2.

FIG. 4A is a top view of the radio wave absorbing member 4. FIG. 4B is a sectional view taken along the line A-A of FIG. 4A. The radio wave absorbing member 4 contains a material including an insulator configured to absorb radio waves. As the insulator material contained in the radio wave absorbing member 4, for example, polyethylene carbonate (PTC) or the like can be used. An opening 4c is formed in the portion corresponding to the radiating portion 5 of the metal member 2 of the radio wave absorbing member 4.

As illustrated in FIG. 2, a thickness d1 of the portion facing the radiating portion 5 of the radome 3 is formed to be an integer multiple of half a waveguide wavelength λg of radio waves propagating within the radome 3, that is, d1=n·λg/2 (n is a positive integer). In contrast, a thickness d2 of the portion other than the portion facing the radiating portion 5 of the radome 3 is formed to a thickness less than half the waveguide wavelength λg of radio waves propagating within the radome 3, that is, d2<λg/2.

A thickness d3 of the radio wave absorbing member 4 is formed to a thickness that is large enough for radio waves propagating within the radio wave absorbing member 4 to be absorbed by dielectric loss or magnetic loss. Specifically, the thickness d3 of the radio wave absorbing member 4 is formed to a thickness with which the intensity of radio waves leaking out from the radio wave absorbing member 4 is equal to or less than a predetermined threshold.

The radiating portion 5 is provided to protrude on the first surface 2a of the metal member 2. Further, the portion facing the radiating portion 5 of the radome 3 is provided to protrude toward the first surface 2a of the metal member 2. Then, the radiating portion 5 and the portion facing the radiating portion 5 of the radome 3 are fitted into the opening 4c of the radio wave absorbing member 4. Further, a first surface 5a of the radiating portion 5 and a second surface 3b of the radome 3 are disposed in contact with each other.

The radiating portion 5 has a shape that expands outward from the first surface 2a of the metal member 2. Similarly, the portion facing the radiating portion 5 of the radome 3 also has a shape that expands outward from the first surface 2a of the metal member 2. An angle θ formed between the radiating portion 5 and the first surface 2a of the metal member 2 is determined on the basis of the opening and directivity required for the antenna 1.

Next, the action of the antenna 1 of the radar apparatus according to Embodiment 1 is described with reference to FIG. 5.

When electric power is supplied to the board 6 of the antenna 1, radio waves are radiated from the radiating portion 5. Most of the radio waves radiated from the radiating portion 5 propagate in the Z direction in the portion with the thickness d1 of the radome 3, as indicated by the solid arrow in FIG. 5, and pass through the interface between the first surface 3a of the radome 3 and the external air layer, to be radiated to the outside of the radome 3, that is, upward in FIG. 5.

As described earlier, the thickness d1 of the portion facing the radiating portion 5 of the radome 3 is formed to be an integer multiple of half the waveguide wavelength λg of radio waves propagating within the radome 3, that is, d1=n·λg/2 (n is a positive integer). Therefore, a relation of λg≥λc₁ is established between the waveguide wavelength λg of radio waves propagating within the radome 3 and a cutoff wavelength λc₁=2·d1 of the portion with the thickness d1 of the radome 3. With this, the radio waves propagating in the Z direction in the portion with the thickness d1 of the radome 3 are hardly attenuated within the radome 3. Thus, the loss of radio waves radiated from the antenna 1 is prevented.

Most of the radio waves propagating in the Z direction in the portion with the thickness d1 of the radome 3 pass through the interface between the first surface 3a of the radome 3 and the external air layer, to be radiated to the outside of the radome 3. However, some of the radio waves are reflected at the interface and propagate in the -Z direction. However, the optical path difference between these reflected waves propagating in the -Z direction and the reflected waves reflected at the interface between the radiating portion 5 and the radome 3 is an integer multiple of the waveguide wavelength λg. Thus, the disturbance of radio waves radiated from the antenna 1 is prevented by these two reflected waves canceling each other out.

In contrast, some of the radio waves radiated from the radiating portion 5 enter the portion with the thickness d2 of the radome 3, as indicated by the dotted arrows in FIG. 5. If these radio waves propagate within the radome 3, the radio waves cause the leakage of interference waves from the radome 3. However, as described earlier, the thickness d2 of the portion other than the portion facing the radiating portion 5 of the radome 3 is formed to be less than half the waveguide wavelength λg of radio waves propagating within the radome 3, that is, d2<λg/2. Therefore, a relation of λg≤λc₂ is established between the waveguide wavelength λg of radio waves propagating within the radome 3 and a cutoff wavelength λc₂=2·d2 of the portion with the thickness d2 of the radome 3. With this, the propagation of radio waves that have entered the portion with the thickness d2 of the radome 3, that is, radio waves that cause interference waves, is prevented.

Most of the radio waves that have entered the portion with the thickness d2 of the radome 3 are reflected at the interface between the first surface 3a of the radome 3 and the external air layer, to enter the radio wave absorbing member 4. As described earlier, the thickness d3 of the radio wave absorbing member 4 is formed to a thickness that is large enough for radio waves propagating within the radio wave absorbing member 4 to be absorbed by dielectric loss or magnetic loss. With this, almost all of the radio waves that have entered the radio wave absorbing member 4 are absorbed in the process of propagating within the radio wave absorbing member 4. Thus, the leakage of interference waves from the radome 3 is prevented.

FIG. 6A is a diagram illustrating the result of the electromagnetic field analysis of the antenna 1 of the radar apparatus according to Embodiment 1. Further, FIG. 6B is a diagram illustrating the directivity of the antenna 1 created on the basis of the result of the electromagnetic field analysis in FIG. 6A. It can be seen that the directivity of the antenna 1 is flat as the leakage of interference waves from the radome 3 is prevented.

FIG. 7 is a diagram illustrating an example of the structure of an antenna 1201 of a radar apparatus according to a related art. Unlike the antenna 1 according to Embodiment 1, no radio wave absorbing member is disposed between a metal member 1202 and a radome 1203. In this case, some of radio waves radiated from a radiating portion 1205 leak out as interference waves while propagating within the radome 1203, as indicated by the dotted arrows in FIG. 7.

FIG. 8A is a diagram illustrating the result of the electromagnetic field analysis of the antenna 1201 of the radar apparatus according to the related art. Further, FIG. 8B is a diagram illustrating the directivity of the antenna 1201 created on the basis of the result of the electromagnetic field analysis in FIG. 8A. It can be seen that, due to the influence of interference waves leaking out while propagating within the radome 1203, the directivity of the antenna 1201 is not flat and has ripples.

As described above, the radar apparatus according to Embodiment 1 includes the metal member 2 having an antenna structure in which the radiating portion 5 for radio waves is provided on the first surface 2a, the radome 3 disposed to face the first surface 2a of the metal member 2, and the radio wave absorbing member 4 disposed between the metal member 2 and the radome 3, having the opening 4c formed in the portion corresponding to the radiating portion 5, and including an insulator configured to absorb radio waves. With this, the leakage of interference waves from the radome 3 is prevented.

Since the leakage of interference waves from the radome 3 is prevented, the directivity of the antenna 1 is flat. For example, when distance measurement is performed with multiple antennas combined, in a case where the directivity of the antennas is not flat, distance measurement errors occur due to gain differences at each angle of each antenna, but with the radar apparatus according to Embodiment 1, the occurrence of such distance measurement errors can be prevented.

Further, since no space is formed between the metal member 2 and the radome 3, the strength of the antenna 1 can be kept high. Further, since the respective structures of the metal member 2, the radome 3, and the radio wave absorbing member 4 are simple, processing and assembly are easy.

Further, the thickness d2 of the portion other than the portion facing the radiating portion 5 of the radome 3 is formed to a thickness less than half the waveguide wavelength λg of radio waves propagating within the radome 3, that is, d2<λg/2. With this, the propagation of radio waves that cause interference waves within the radome 3 is prevented.

Further, the thickness d1 of the portion facing the radiating portion 5 of the radome 3 is formed to be an integer multiple of half the waveguide wavelength λg of radio waves propagating within the radome 3, that is, d1=n·λg/2 (n is a positive integer). With this, the loss and disturbance of radio waves radiated from the antenna 1 are prevented.

Further, the thickness d3 of the radio wave absorbing member 4 is formed to a thickness that is large enough for radio waves propagating within the radio wave absorbing member 4 to be absorbed by dielectric loss or magnetic loss. Specifically, the thickness d3 of the radio wave absorbing member 4 is formed to a thickness with which the intensity of radio waves leaking out from the radio wave absorbing member 4 is equal to or less than a predetermined threshold. With this, the radio wave absorbing member 4 absorbs radio waves effectively.

Further, the radiating portion 5 is provided to protrude on the first surface 2a of the metal member 2, and the portion facing the radiating portion 5 of the radome 3 is provided to protrude toward the first surface 2a of the metal member 2. Then, the radiating portion 5 and the portion facing the radiating portion 5 of the radome 3 are fitted into the opening 4c of the radio wave absorbing member 4. With this, the positioning of the metal member 2 and the radome 3 during assembly becomes easier.

Further, the radio wave absorbing member 4 and the radome 3 are disposed in contact with each other, and hence the radome 3 is prevented from being damaged when an external force is applied to the radome 3.

Moreover, the circuit board 6 is provided on the second surface 2b of the metal member 2, and all of the electronic components necessary for the operation of the antenna 1 are disposed on the circuit board 6. Then, no electronic component is disposed on the first surface 2a of the metal member 2. Such a structure is employed, thereby making it easier to dispose the radio wave absorbing member 4 between the first surface 2a of the metal member 2 and the radome 3.

### [Embodiment 2]

FIG. 9 is a sectional view of an antenna 201 of a radar apparatus according to Embodiment 2 of the present disclosure. A recessed portion 203c is formed in a first surface 203a of a radome 203 of the antenna 201. With this recessed portion 203c, the directivity of radio waves radiated from the antenna 201 can be controlled.

### [Embodiment 3]

FIG. 10 is a sectional view of an antenna 301 of a radar apparatus according to Embodiment 3 of the present disclosure. A protruding portion 303d is formed on a first surface 303a of a radome 303 of the antenna 301. With this protruding portion 303d, the directivity of radio waves radiated from the antenna 301 can be widened.

### [Embodiment 4]

FIG. 11 is a sectional view of an antenna 401 of a radar apparatus according to Embodiment 4 of the present disclosure. The antenna 401 includes the metal member 2 having an antenna structure, and the radome 3 disposed to face the first surface 2a of the metal member 2. Further, a radio wave absorbing member 404 and a cushioning member 407 are disposed between the metal member 2 and the radome 3.

FIG. 12A is a top view of the radio wave absorbing member 404. FIG. 12B is a sectional view taken along the line A-A of FIG. 12A. The radio wave absorbing member 404 is disposed in a ring shape only at the periphery of the radiating portion 5. With this, as compared to Embodiment 1, the usage amount of radio wave absorbing member can be reduced, thereby reducing manufacturing costs.

FIG. 13A is a top view of the cushioning member 407. FIG. 13B is a sectional view taken along the line A-A of FIG. 13A. The cushioning member 407 is disposed between the metal member 2 and the radome 3, except in the portion in which the radio wave absorbing member 404 is disposed. With this, while the usage amount of radio wave absorbing member is reduced, the strength of the antenna 401 can be maintained. However, in a case where sufficient strength can be achieved without using the cushioning member 407, the portion illustrated as the cushioning member 407 in FIG. 13A and FIG. 13B may remain as a cavity.

### [Embodiment 5]

FIG. 14 is a sectional view of an antenna 501 of a radar apparatus according to Embodiment 5 of the present disclosure. Between the metal member 2 and the radome 3, a radio wave absorbing member 504 is disposed in multiple ring shapes at the periphery of the radiating portion 5. Further, a cushioning member 507 is disposed between the metal member 2 and the radome 3, except in the portion in which the radio wave absorbing member 504 is disposed.

With this, while the usage amount of radio wave absorbing member is reduced, the strength of the antenna 501 can be maintained. However, in a case where sufficient strength can be achieved without using the cushioning member 507, the portion illustrated as the cushioning member 507 in FIG. 14 may remain as a cavity.

### [Embodiment 6]

FIG. 15 is a sectional view of an antenna 601 of a radar apparatus according to Embodiment 6 of the present disclosure. A radio wave absorbing member 604 disposed between the metal member 2 and the radome 3 includes multiple layers of radio wave absorbing members 604a and 604b with different materials. The multiple layers of radio wave absorbing members with different materials are used in combination in this manner, thereby making it easier to adjust the characteristics of the radio wave absorbing member.

### [Embodiment 7]

FIG. 16 is a sectional view of an antenna 701 of a radar apparatus according to Embodiment 7 of the present disclosure. A radio wave absorbing member 704 disposed between the metal member 2 and the radome 3 includes multiple layers of radio wave absorbing members 704a and 704b with different materials. The radio wave absorbing member 704b, which is one of them, is an air layer (cavity) or a cushioning member. The air layer is used as one of the multiple layers of radio wave absorbing members in this manner, thereby improving the flexibility in adjusting the characteristics of the radio wave absorbing member.

### [Embodiment 8]

FIG. 17 is a sectional view of an antenna 801 of a radar apparatus according to Embodiment 8 of the present disclosure. Multiple radiating portions 805 are provided on a metal member 802. Even with the multiple radiating portions 805 provided in this manner, the propagation of radio waves radiated from each of the radiating portions 805 in the portion with the thickness d2 of a radome 803 is prevented, thereby preventing mutual coupling between each of the radiating portions 805. FIG. 18 to FIG. 19 are variations of the antenna having multiple radiating portions.

### [Embodiment 9]

FIG. 20 is an exploded view of an antenna 901 of a radar apparatus according to Embodiment 9 of the present disclosure. FIG. 21 is a sectional view taken along the line A-A of FIG. 20. The antenna 901 includes a flat plate-like dielectric substrate (substrate) 902 having an antenna structure, a radome 903 disposed to face a first surface 902a of the dielectric substrate 902, a radio wave absorbing member 904 disposed between the dielectric substrate 902 and the radome 903, and a casing 920 configured to accommodate the dielectric substrate 902.

The antenna 901 according to Embodiment 9 has a "backside power delivery structure" in which feeding is performed from the back surface, that is, a second surface 902b of the dielectric substrate 902, and a feed line configured to feed the antenna structure is provided on the back surface 902b of the dielectric substrate 902. On the front surface, that is, the first surface 902a of the dielectric substrate 902, a radiating portion 905 configured to radiate or receive radio waves is provided. On the back surface 902b of the dielectric substrate 902, a circuit board 906 on which electronic components and the like are disposed is disposed. Further, at the lower part of the casing 920 configured to accommodate the dielectric substrate 902, that is, on the side facing the back surface 902b of the dielectric substrate 902 of the casing 920, a heat dissipation member 921 is provided.

In this manner, the feed line configured to feed the antenna structure is provided on the back surface 902b of the dielectric substrate 902, and the circuit board 906 on which electronic components and the like are disposed is also disposed on the back surface 902b, with the result that only the radiating portion 905 is disposed on the front surface 902a of the dielectric substrate 902. With this, unnecessary radiation from the front surface 902a of the dielectric substrate 902 can be prevented. Further, since the circuit board 906 and the heat dissipation member 921 are collectively disposed on the back surface 902b of the dielectric substrate 902, sufficient space can be secured to dispose the radio wave absorbing member 904 on the front surface 902a of the dielectric substrate 902.

FIG. 22 is a sectional view illustrating the detailed structure of the dielectric substrate 902. The dielectric substrate 902 includes a feed line (feed cable) 910, a waveguide 913 configured to transmit signals fed from the feed line 910 from the back surface 902b side to the front surface 902a side of the dielectric substrate 902, a feed portion 908 configured to feed signals transmitted by the waveguide 913 to the radiating portion 905 by proximity coupling, and the radiating portion 905 configured to radiate radio waves on the basis of signals fed from the feed portion 908.

The dielectric substrate 902 includes multiple layers L1 to L7. The surface of the layer L1 (the surface on the upper side of the substrate) corresponds to the front surface 902a of the dielectric substrate 902. The surface of the layer L7 (the surface on the lower side of the substrate) corresponds to the back surface 902b of the dielectric substrate 902. The layers L1 and L7 include, for example, fluorine substrates or glass polyimide substrates. The layers L2, L3, L4, L5, and L6 include, for example, high-frequency materials such as glass epoxy substrates.

Between the layers L1 and L2, the feed portion 908 is provided. The feed portion 908 is, for example, a plate-like conductive member. The conductive member is, for example, a metal such as copper, aluminum, or gold. The feed portion 908 feeds signals supplied from the waveguide 913 to the radiating portion 905 by proximity coupling.

Between the layers L5 and L6, ground plates 909b, which are conductive members, are provided on the left and right to be separated by an interval corresponding to an opening portion 915 in a direction parallel to the substrate surface. Between the layers L2 and L3, ground plates 909c, which are conductive members, are provided on the left and right with an interval corresponding to an opening portion 916 in the direction parallel to the substrate surface.

Between the layers L6 and L7, a ground plate 909a, which is a conductive member, is provided. The ground plate 909a functions as the ground line of the feed line 910. The feed line 910 is a microstrip line. The ground line (ground plate 909a) may be connected or coupled to the left ground plate 909b through the layer L6 using one or multiple vias.

A via 914a is provided to penetrate the layers L3 to L5 to electrically connect the left ground plates 909b and 909c. A via 914b is provided to penetrate the layers L3 to L5 to electrically connect the right ground plates 909b and 909c.

Part of the upper side of the region sandwiched between the via 914a and the via 914b is covered by the left ground plate 909c and the right ground plate 909c, and the remaining part serves as the opening portion 916. Part of the lower side of the region sandwiched between the via 914a and the via 914b is covered by the left ground plate 909b and the right ground plate 909b, and the remaining part serves as the opening portion 915.

In the lateral direction of the drawing sheet of FIG. 22, the positions of the opening portions 915 and 916 are different, but the positions may be the same or may partially overlap. The via 914a, the via 914b, the left ground plate 909c, the right ground plate 909c, the left ground plate 909b, and the right ground plate 909b form the waveguide 913 (in-substrate waveguide).

One of the opening portion 915 and the opening portion 916 corresponds to the input portion of the waveguide 913, and the other corresponds to the output portion of the waveguide 913. Specifically, in a case where the antenna 901 is used for transmission, the opening portion 915 corresponds to the input portion, and the opening portion 916 corresponds to the output portion. In a case where the antenna 901 is used for reception, the opening portion 916 corresponds to the input portion, and the opening portion 915 corresponds to the output portion. In the following description, a case where the opening portion 915 corresponds to the input portion of the waveguide 913, and the opening portion 916 corresponds to the output portion of the waveguide 913 is mainly assumed.

On the surface of the layer L1, the radiating portion 905 is provided. On the lower-side surface (back surface) of the layer L7, a signal line 912 of the feed line 910 is provided. The signal line 912, the ground plate 909a, and the layer L7 (dielectric layer) form the feed line 910. The feed line 910 is connected to a power supply circuit 911 configured to supply high-frequency signals (in Embodiment 9, millimeter wave band signals). The power supply circuit 911 includes, for example, an integrated circuit. In Embodiment 9, the feed line 910 is a microstrip line, but the feed line 910 can also be another line such as a coplanar line.

The feed line 910 transmits millimeter wave band signals supplied from the power supply circuit 911. An end portion 912a of the signal line 912 faces the opening portion 915 through the layer L7 and the layer L6. Signals transmitted through the feed line 910 are input to the waveguide 913 through the opening portion 915 from the end portion 912a of the signal line 912. As described earlier, the structure in which feeding is performed from the surface opposite to the surface on which the radiating portion 905 is disposed is called the "backside power delivery structure."

### [Modified Examples]

The antenna structure of the radar apparatus according to Embodiments 1 to 9 has the radiating portion provided to protrude on the first surface of the flat plate-like substrate. Other than such a structure, the antenna structure of the radar apparatus may be, for example, a slot antenna, a microstrip antenna, or a horn antenna. Thus, for example, the radiating portion may be a space provided on the first surface of the flat plate-like substrate.

In the radar apparatus according to Embodiments 1 to 9, a frequency selective surface (FSS) and a metasurface may be disposed on the first surface of the radome. With this, unnecessary interfering waves radiated from the radome can be absorbed and attenuated.

### [Application Examples]

In the following, application examples of the antenna of the radar apparatus according to the present disclosure are described. The antenna of the radar apparatus is also applicable to any on-vehicle control system, apparatus, method, and the like described below.

### <<1. Configuration Example of Vehicle Control System>>

FIG. 23 is a block diagram illustrating a configuration example of a vehicle control system 11 that is an example of a mobile apparatus control system to which the present technology is applied. The antenna of the radar apparatus according to the embodiments or the modified examples described above can also be used as an antenna for a case where, for example, a communication unit 22 performs wireless communication.

The vehicle control system 11 is provided in a vehicle 100 and performs processing related to the travel assistance and automated driving of the vehicle 100.

The vehicle control system 11 includes a vehicle control ECU (Electronic Control Unit) 21, the communication unit 22, a map information accumulation unit 23, a position information acquisition unit 24, an external recognition sensor 25, an in-vehicle sensor 26, a vehicle sensor 27, a storage unit 28, the travel assistance and automated driving control unit 29, a DMS (Driver Monitoring System) 30, an HMI (Human Machine Interface) 31, and a vehicle control unit 32.

The vehicle control ECU 21, the communication unit 22, the map information accumulation unit 23, the position information acquisition unit 24, the external recognition sensor 25, the in-vehicle sensor 26, the vehicle sensor 27, the storage unit 28, the travel assistance and automated driving control unit 29, the driver monitoring system (DMS) 30, the human machine interface (HMI) 31, and the vehicle control unit 32 are communicably connected to each other via a communication network 41. The communication network 41 includes, for example, an on-vehicle communication network or a bus that conforms to digital bidirectional communication standards, such as CAN (Controller Area Network), LIN (Local Interconnect Network), LAN (Local Area Network), FlexRay (registered trademark), or Ethernet (registered trademark). The communication network 41 may be differentiated depending on the type of data to be transmitted. For example, CAN may be applied for data related to vehicle control, while Ethernet may be applied for large-capacity data. Note that, in some cases, each unit of the vehicle control system 11 is directly connected without the communication network 41 using wireless communication intended for relatively short-range communication, such as near field communication (NFC) or Bluetooth (registered trademark).

Note that, in the following, in a case where each unit of the vehicle control system 11 performs communication via the communication network 41, the description of the communication network 41 is omitted. For example, in a case where the vehicle control ECU 21 communicates with the communication unit 22 via the communication network 41, such a case is simply described as "the vehicle control ECU 21 communicates with the communication unit 22."

The vehicle control ECU 21 includes, for example, various processors such as a CPU (Central Processing Unit) and an MPU (Micro Processing Unit). The vehicle control ECU 21 controls all or some of the functions of the vehicle control system 11.

The communication unit 22 communicates with various types of equipment inside and outside the vehicle, other vehicles, servers, base stations, and the like, and transmits and receives various types of data. At this time, the communication unit 22 can perform communication using multiple communication methods.

The communication with the outside of the vehicle that the communication unit 22 can execute is generally described. The communication unit 22 communicates with, for example, servers existing on external networks (hereinafter referred to as an "external server") via base stations or access points using wireless communication methods such as 5G (5th generation mobile communication system), LTE (Long Term Evolution), or DSRC (Dedicated Short Range Communications). The external networks with which the communication unit 22 communicates include, for example, the Internet, cloud networks, or company-specific networks. The communication method that the communication unit 22 performs with respect to the external networks is not particularly limited as long as it is a wireless communication method capable of digital bidirectional communication at a predetermined communication speed or higher and over a predetermined distance or longer.

Further, for example, the communication unit 22 can communicate with terminals existing in the vicinity of the subject vehicle using P2P (Peer To Peer) technology. The terminals existing in the vicinity of the subject vehicle are, for example, terminals worn by mobile objects moving at relatively low speeds, such as pedestrians and bicycles, terminals installed at fixed positions such as stores, or MTC (Machine Type Communication) terminals. Moreover, the communication unit 22 can also perform V2X communication. V2X communication refers to communication between the subject vehicle and others, such as vehicle-to-vehicle communication with other vehicles, vehicle-to-infrastructure communication with roadside units or the like, vehicle-to-home communication with homes, and vehicle-to-pedestrian communication with terminals or the like possessed by pedestrians.

The communication unit 22 can receive, for example, programs for updating software for controlling the operation of the vehicle control system 11 from the outside (Over The Air). The communication unit 22 can also receive map information, traffic information, information regarding surroundings of the vehicle 100, and the like from the outside. Further, for example, the communication unit 22 can transmit information associated with the vehicle 100, information regarding surroundings of the vehicle 100, and the like to the outside. Examples of the information associated with the vehicle 100 that the communication unit 22 transmits to the outside include data indicating the state of the vehicle 100 and recognition results by a recognition unit 73. Moreover, for example, the communication unit 22 performs communication corresponding to vehicle emergency call systems such as eCall.

For example, the communication unit 22 receives electromagnetic waves transmitted by the Vehicle Information and Communication System (VICS) (registered trademark), such as radio wave beacons, optical beacons, or FM multiplex broadcasting.

The communication with the inside of the vehicle that the communication unit 22 can execute is generally described. The communication unit 22 can communicate with each piece of equipment inside the vehicle using, for example, wireless communication. The communication unit 22 can wirelessly communicate with equipment inside the vehicle using, for example, communication methods capable of digital bidirectional communication at a predetermined communication speed or higher via wireless communication, such as wireless LAN, Bluetooth, NFC, or WUSB (Wireless USB). The communication unit 22 is not limited to this and can also communicate with each piece of equipment inside the vehicle using wired communication. For example, the communication unit 22 can communicate with each piece of equipment inside the vehicle via wired communication through cables connected to connection terminals, which are not illustrated. The communication unit 22 can communicate with each piece of equipment inside the vehicle using, for example, communication methods capable of digital bidirectional communication at a predetermined communication speed or higher via wired communication, such as USB (Universal Serial Bus), HDMI (High-Definition Multimedia Interface) (registered trademark), or MHL (Mobile High-definition Link).

Here, equipment inside the vehicle refers to, for example, equipment not connected to the communication network 41 inside the vehicle. As the equipment inside the vehicle, for example, mobile equipment or wearable equipment possessed by the passenger such as a driver, information equipment brought into the vehicle and temporarily installed, or the like is assumed.

The map information accumulation unit 23 accumulates either or both maps acquired from the outside and maps created in the vehicle 100. For example, the map information accumulation unit 23 accumulates three-dimensional high-precision maps and global maps that cover wider areas with lower precision than high-precision maps.

Examples of the high-precision maps include dynamic maps, point cloud maps, and vector maps. A dynamic map is, for example, a map including four layers of dynamic information, semi-dynamic information, semi-static information, and static information, and is provided from an external server or the like to the vehicle 100. A point cloud map is a map including point clouds (point cloud data). A vector map is a map in which, for example, traffic information such as lane and traffic light positions and a point cloud map are associated and adapted for ADAS (Advanced Driver Assistance System) or AD (Autonomous Driving).

Point cloud maps and vector maps may be provided from, for example, external servers or may be created in the vehicle 100 and accumulated in the map information accumulation unit 23 as maps for matching with local maps, which are described later, on the basis of sensing results by a camera 51, a radar 52, a LiDAR 53, or the like. Further, in a case where a high-precision map is provided from an external server or the like, in order to reduce communication capacity, for example, map data regarding several hundred meters square related to a planned route on which the vehicle 100 is to travel from now on is acquired from the external server or the like.

The position information acquisition unit 24 receives GNSS (Global Navigation Satellite System) signals from GNSS satellites and acquires position information regarding the vehicle 100. The acquired position information is supplied to the travel assistance and automated driving control unit 29. Note that the position information acquisition unit 24 is not limited to methods using GNSS signals and may acquire position information using beacons, for example.

The external recognition sensor 25 includes various sensors used for recognizing the external situation of the vehicle 100 and supplies sensor data from each sensor to each unit of the vehicle control system 11. The external recognition sensor 25 includes any type and number of sensors.

For example, the external recognition sensor 25 includes the camera 51, the radar 52, the LiDAR (Light Detection and Ranging, Laser Imaging Detection and Ranging) 53, and an ultrasonic sensor 54. The external recognition sensor 25 is not limited to this and may include one or more types of sensors among the camera 51, the radar 52, the LiDAR 53, and the ultrasonic sensor 54. The numbers of the cameras 51, the radars 52, the LiDARs 53, and the ultrasonic sensors 54 are not particularly limited as long as the camera 51, the radar 52, the LiDAR 53, and the ultrasonic sensor 54 can realistically be installed in the vehicle 100. Further, the types of sensors included in the external recognition sensor 25 are not limited to this example, and the external recognition sensor 25 may include other types of sensors. Examples of the sensing areas of each sensor included in the external recognition sensor 25 are described later.

Note that the imaging method of the camera 51 is not particularly limited. For example, a camera using an imaging method capable of distance measurement, such as a ToF (Time of Flight) camera, a stereo camera, a monocular camera, or an infrared camera, can be applied to the camera 51 as needed. The camera 51 is not limited to this and may be one for simply acquiring captured images, regardless of distance measurement.

Further, for example, the external recognition sensor 25 can include an environmental sensor for detecting the environment around the vehicle 100. The environmental sensor is a sensor for detecting an environment such as weather, atmospheric phenomena, and brightness. Examples of the environmental sensor can include various sensors such as raindrop sensors, fog sensors, sunlight sensors, snow sensors, and illuminance sensors.

Moreover, for example, the external recognition sensor 25 includes a microphone used for detecting the sound around the vehicle 100, the positions of sound sources, and the like.

The in-vehicle sensor 26 includes various sensors for detecting information regarding the inside of the vehicle and supplies sensor data from each sensor to each unit of the vehicle control system 11. The types and numbers of the various sensors included in the in-vehicle sensor 26 are not particularly limited as long as the sensors can realistically be installed in the vehicle 100.

For example, the in-vehicle sensor 26 can include at least one or more types of sensors among cameras, radars, seat sensors, steering wheel sensors, microphones, and biosensors. As the cameras included in the in-vehicle sensor 26, for example, cameras using various imaging methods capable of distance measurement, such as ToF cameras, stereo cameras, monocular cameras, or infrared cameras can be used. The cameras included in the in-vehicle sensor 26 are not limited to these and may be ones for simply acquiring captured images, regardless of distance measurement. A biosensor included in the in-vehicle sensor 26 is provided on the seat, the steering wheel, or the like and detects various types of biometric information regarding the passenger such as a driver.

The vehicle sensor 27 includes various sensors for detecting the state of the vehicle 100 and supplies sensor data from each sensor to each unit of the vehicle control system 11. The types and numbers of the various sensors included in the vehicle sensor 27 are not particularly limited as long as the sensors can realistically be installed in the vehicle 100.

For example, the vehicle sensor 27 includes a speed sensor, an acceleration sensor, an angular velocity sensor (gyro sensor), and an inertial measurement unit (IMU) that integrates them. For example, the vehicle sensor 27 includes a steering angle sensor configured to detect the steering angle of the steering wheel, a yaw rate sensor, an accelerator sensor configured to detect the operation amount of the accelerator pedal, and a brake sensor configured to detect the operation amount of the brake pedal. For example, the vehicle sensor 27 includes a rotation sensor configured to detect the number of rotations of the engine or the motor, an air pressure sensor configured to detect tire pressure, a slip ratio sensor configured to detect tire slip ratio, and a wheel speed sensor configured to detect the rotation speed of the wheels. For example, the vehicle sensor 27 includes a battery sensor configured to detect the remaining amount and temperature of the battery, and an impact sensor configured to detect external impact.

The storage unit 28 includes at least one of a nonvolatile storage medium and a volatile storage medium, and stores data and programs. The storage unit 28 is used as, for example, EEPROM (Electrically Erasable Programmable Read Only Memory) and RAM (Random Access Memory), and as the storage media, magnetic storage devices such as HDDs (Hard Disc Drives), semiconductor storage devices, optical storage devices, and magnetooptical storage devices can be applied. The storage unit 28 stores various programs and data that each unit of the vehicle control system 11 uses. For example, the storage unit 28 includes an EDR (Event Data Recorder) and DSSAD (Data Storage System for Automated Driving), and stores information regarding the vehicle 100 before and after events such as accidents and information acquired by the in-vehicle sensor 26.

The travel assistance and automated driving control unit 29 controls the travel assistance and automated driving of the vehicle 100. For example, the travel assistance and automated driving control unit 29 includes an analysis unit 61, an action planning unit 62, and an operation control unit 63.

The analysis unit 61 performs the analysis processing of the vehicle 100 and the situation around the vehicle 100. The analysis unit 61 includes a self-position estimation unit 71, a sensor fusion unit 72, and the recognition unit 73.

The self-position estimation unit 71 estimates the self-position of the vehicle 100 on the basis of sensor data from the external recognition sensor 25 and high-precision maps accumulated in the map information accumulation unit 23. For example, the self-position estimation unit 71 generates a local map on the basis of sensor data from the external recognition sensor 25 and matches the local map with the high-precision map, thereby estimating the self-position of the vehicle 100. The reference of the position of the vehicle 100 is, for example, the center of the rear wheel pair axle.

A local map is, for example, a three-dimensional high-precision map created using a technology such as SLAM (Simultaneous Localization and Mapping) or an occupancy grid map. A three-dimensional high-precision map is, for example, a point cloud map as described above. An occupancy grid map is a map that divides the three-dimensional or two-dimensional space around the vehicle 100 into grids (lattices) of a predetermined size and indicates the occupied state of an object in grid units. The occupied state of an object is indicated by, for example, the presence, absence, or existence probability of the object. The local map is also used for, for example, the detection processing and the recognition processing of the external situation of the vehicle 100 by the recognition unit 73.

Note that the self-position estimation unit 71 may estimate the self-position of the vehicle 100 on the basis of position information acquired by the position information acquisition unit 24 and sensor data from the vehicle sensor 27.

The sensor fusion unit 72 combines multiple different types of sensor data (for example, image data supplied from the camera 51 and sensor data supplied from the radar 52), thereby performing sensor fusion processing to obtain new information. Examples of the method of combining different types of sensor data include integration, fusion, and association.

The recognition unit 73 executes detection processing to detect the external situation of the vehicle 100 and recognition processing to recognize the external situation of the vehicle 100.

For example, the recognition unit 73 performs the detection processing and the recognition processing of the external situation of the vehicle 100 on the basis of information from the external recognition sensor 25, information from the self-position estimation unit 71, information from the sensor fusion unit 72, and the like.

Specifically, for example, the recognition unit 73 performs the detection processing, the recognition processing, and the like of objects around the vehicle 100. Object detection processing refers to, for example, the processing of detecting the presence or absence, sizes, shapes, positions, movement, and the like of objects. Object recognition processing refers to, for example, the processing of recognizing attributes such as the types of objects or of identifying specific objects. However, the detection processing and the recognition processing are not necessarily clearly separated and overlap in some cases.

For example, the recognition unit 73 performs clustering to classify point clouds based on sensor data from the radar 52, the LiDAR 53, or the like into clusters of points, thereby detecting objects around the vehicle 100. With this, the presence or absence, sizes, shapes, and positions of objects around the vehicle 100 are detected.

For example, the recognition unit 73 performs tracking to follow the movement of clusters of points classified by clustering, thereby detecting the movement of the objects around the vehicle 100. With this, the speed and directions of travel (movement vectors) of objects around the vehicle 100 are detected.

For example, the recognition unit 73 detects or recognizes vehicles, people, bicycles, obstacles, structures, roads, traffic lights, traffic signs, road markings, and the like on the basis of image data supplied from the camera 51. Further, the recognition unit 73 may perform recognition processing such as semantic segmentation to recognize the types of objects around the vehicle 100.

For example, the recognition unit 73 can perform the recognition processing of traffic rules around the vehicle 100 on the basis of maps accumulated in the map information accumulation unit 23, the result of self-position estimation by the self-position estimation unit 71, and the recognition results of objects around the vehicle 100 by the recognition unit 73. Through this processing, the recognition unit 73 can recognize the positions and states of traffic lights, the content of traffic signs and road markings, the content of traffic regulations, drivable lanes, and the like.

For example, the recognition unit 73 can perform the recognition processing of the environment around the vehicle 100. As the surrounding environment that the recognition unit 73 recognizes, weather, temperature, humidity, brightness, road surface conditions, and the like are assumed.

The action planning unit 62 creates action plans for the vehicle 100. For example, the action planning unit 62 performs route planning and route following processing to create action plans.

Note that route planning (Global path planning) refers to the processing of planning a rough route from start to goal. This route planning also includes what is called trajectory planning, which is the processing of considering the motion characteristics of the vehicle 100 and generating a trajectory on the planned route that allows for safe and smooth driving in the vicinity of the vehicle 100 (Local path planning).

Route following refers to the processing of planning operations to drive safely and accurately along a route planned by route planning within the planned time. On the basis of the result of this route following processing, for example, the action planning unit 62 can calculate the target speed and the target angular velocity of the vehicle 100.

The operation control unit 63 controls the operation of the vehicle 100 to achieve action plans created by the action planning unit 62.

For example, the operation control unit 63 controls a steering control unit 81, a brake control unit 82, and a drive control unit 83 included in the vehicle control unit 32, which are described later, to perform acceleration/deceleration control and direction control such that the vehicle 100 travels along a trajectory calculated by trajectory planning. For example, the operation control unit 63 performs cooperative control for the purpose of achieving ADAS functions such as collision avoidance or impact mitigation, following driving, speed maintenance driving, collision warning for the subject vehicle, and lane departure warning for the subject vehicle. For example, the operation control unit 63 performs cooperative control for the purpose of, for example, automated driving, which allows the vehicle to autonomously travel independently of the operation of the driver.

The DMS 30 performs the authentication processing of the driver, the recognition processing of the state of the driver, and the like on the basis of sensor data from the in-vehicle sensor 26, input data input to the HMI 31, which is described later, and the like. As the state of the driver to be recognized, for example, the physical condition, alertness level, concentration level, fatigue level, line-of-sight direction, drunkenness level, driving operation, posture, and the like of the driver are assumed.

Note that the DMS 30 may perform the authentication processing of a passenger other than the driver and the recognition processing of the state of the passenger. Further, for example, the DMS 30 may perform the recognition processing of the situation inside the vehicle on the basis of sensor data from the in-vehicle sensor 26. As the situation inside the vehicle to be recognized, for example, temperature, humidity, brightness, and odor are assumed.

The HMI 31 performs the input of various types of data, instructions, and the like, and the presentation of various types of data to the driver and the like.

The input of data by the HMI 31 is generally described. The HMI 31 includes input devices for people to input data. The HMI 31 generates input signals on the basis of data, instructions, and the like input by the input devices and supplies the input signals to each unit of the vehicle control system 11. The HMI 31 includes, as input devices, operating elements such as a touch panel, a button, a switch, and a lever. The HMI 31 is not limited to this and may further include input devices that support the input of information by methods other than manual operation, such as voice or gestures. Moreover, the HMI 31 may use, for example, remote control apparatuses utilizing infrared or radio waves, or external connection equipment such as mobile equipment or wearable equipment compatible with the operation of the vehicle control system 11 as input devices.

The presentation of data by the HMI 31 is generally described. The HMI31 generates visual information, auditory information, and tactile information regarding the passenger or the outside of the vehicle. Further, the HMI 31 performs output control to control the output, the output content, the output timing, the output method, and the like of each piece of generated information. The HMI 31 generates and outputs, as visual information, for example, information indicated by images or lights, such as operation screens, the state display of the vehicle 100, warning displays, and monitor images indicating the situation around the vehicle 100. Further, the HMI 31 generates and outputs, as auditory information, for example, information indicated by sounds, such as voice guidance, warning sounds, and warning messages. Moreover, the HMI 31 generates and outputs, as tactile information, for example, information that is given to the sense of touch of the passenger through force, vibration, movement, or the like.

As the output device for the HMI 31 to output visual information, for example, a display apparatus configured to present visual information by displaying images by itself, or a projector apparatus configured to present visual information by projecting images can be applied. Note that the display apparatus may be, other than a display apparatus having a normal display, for example, an apparatus configured to display visual information within the field of view of the passenger, such as a head-up display, a transmissive display, or a wearable device with an AR (Augmented Reality) function. Further, the HMI 31 can also use a display device included in a navigation device, an instrument panel, a CMS (Camera Monitoring System), an electronic mirror, lamps, or the like, which are provided in the vehicle 100, as an output device configured to output visual information.

As the output device for the HMI 31 to output auditory information, for example, an audio speaker, headphones, earphones, or the like can be applied.

As the output device for the HMI 31 to output tactile information, for example, haptic elements using haptic technology can be applied. The haptic elements are provided in parts of the vehicle 100 with which the passenger comes into contact, such as the steering wheel and the seats.

The vehicle control unit 32 controls each unit of the vehicle 100. The vehicle control unit 32 includes the steering control unit 81, the brake control unit 82, the drive control unit 83, a body control unit 84, a light control unit 85, and a horn control unit 86.

The steering control unit 81 detects and controls the state of the steering system of the vehicle 100, for example. The steering system includes, for example, a steering mechanism including a steering wheel and the like, and electric power steering. The steering control unit 81 includes, for example, a steering ECU configured to control the steering system, and an actuator configured to drive the steering system.

The brake control unit 82 detects and controls the state of the brake system of the vehicle 100, for example. The brake system includes, for example, a brake mechanism including a brake pedal and the like, an ABS (Antilock Brake System), and a regenerative brake mechanism. The brake control unit 82 includes, for example, a brake ECU configured to control the brake system, and an actuator configured to drive the brake system.

The drive control unit 83 detects and controls the state of the drive system of the vehicle 100, for example. The drive system includes, for example, an accelerator pedal, a drive force generation apparatus for generating drive force, such as an internal combustion engine or a drive motor, and a drive force transmission mechanism for transmitting drive force to wheels. The drive control unit 83 includes, for example, a drive ECU configured to control the drive system, and an actuator configured to drive the drive system.

The body control unit 84 detects and controls the state of the body system of the vehicle 100, for example. The body system includes, for example, a keyless entry system, a smart key system, a power window apparatus, power seats, an air conditioning apparatus, airbags, seatbelts, and a shift lever. The body control unit 84 includes, for example, a body system ECU configured to control the body system, and an actuator configured to drive the body system.

The light control unit 85 detects and controls the states of the various lights of the vehicle 100, for example. As the lights to be controlled, for example, headlights, backlights, fog lights, turn signals, brake lights, projections, and bumper displays are assumed. The light control unit 85 includes a light ECU configured to control the lights, an actuator configured to drive the lights, and the like.

The horn control unit 86 detects and controls the state of the car horn of the vehicle 100, for example. The horn control unit 86 includes, for example, a horn ECU configured to control the car horn, and an actuator configured to drive the car horn.

FIG. 24 is a view illustrating examples of the sensing areas of the camera 51, the radar 52, the LiDAR 53, the ultrasonic sensor 54, and the like of the external recognition sensor 25 in FIG. 23. Note that FIG. 24 schematically illustrates the vehicle 100 as viewed from above, with the left end side corresponding to the front end (front) side of the vehicle 100, and with the right end side corresponding to the rear end (rear) side of the vehicle 100.

A sensing area 101F and a sensing area 101B indicate examples of the sensing areas of the ultrasonic sensor 54. The sensing area 101F covers the area around the front end of the vehicle 100 by the multiple ultrasonic sensors 54. The sensing area 101B covers the area around the rear end of the vehicle 100 by the multiple ultrasonic sensors 54.

Sensing results in the sensing area 101F and the sensing area 101B are used for, for example, the parking assistance of the vehicle 100.

A sensing area 102F to a sensing area 102B indicate examples of the sensing areas of the radar 52 for a short range or an intermediate range. The sensing area 102F covers positions farther than the sensing area 101F in front of the vehicle 100. The sensing area 102B covers positions farther than the sensing area 101B in rear of the vehicle 100. The sensing area 102L covers the area around the rear of the left-side surface of the vehicle 100. The sensing area 102R covers the area around the rear of the right-side surface of the vehicle 100.

Sensing results in the sensing area 102F are used for, for example, detecting vehicles, pedestrians, and the like located in front of the vehicle 100. Sensing results in the sensing area 102B are used for, for example, the function of preventing collision at the rear of the vehicle 100. Sensing results in the sensing area 102L and the sensing area 102R are used for, for example, detecting objects in blind spots on the lateral sides of the vehicle 100.

A sensing area 103F to a sensing area 103B indicate examples of the sensing area of the camera 51. The sensing area 103F covers positions farther than the sensing area 102F in front of the vehicle 100. The sensing area 103B covers positions farther than the sensing area 102B in rear of the vehicle 100. The sensing area 103L covers the area around the left-side surface of the vehicle 100. The sensing area 103R covers the area around the right-side surface of the vehicle 100.

Sensing results in the sensing area 103F can be used for, for example, the recognition of traffic lights and traffic signs, lane departure prevention assistance systems, and automatic headlight control systems. Sensing results in the sensing area 103B can be used for, for example, parking assistance and surround view systems. Sensing results in the sensing area 103L and the sensing area 103R can be used for, for example, surround view systems.

A sensing area 104 indicates an example of the sensing area of the LiDAR 53. The sensing area 104 covers positions farther than the sensing area 103F in front of the vehicle 100. On the other hand, the sensing area 104 has a narrower range in the left-right direction than the sensing area 103F.

Sensing results in the sensing area 104 are used for, for example, detecting objects such as surrounding vehicles.

A sensing area 105 indicates an example of the sensing area of the radar 52 for a long range. The sensing area 105 covers positions farther than the sensing area 104 in front of the vehicle 100. On the other hand, the sensing area 105 has a narrower range in the left-right direction than the sensing area 104.

Sensing results in the sensing area 105 are used for, for example, ACC (Adaptive Cruise Control), emergency braking, and collision avoidance.

Note that the sensing areas of each sensor, including the camera 51, the radar 52, the LiDAR 53, and the ultrasonic sensor 54, which are included in the external recognition sensor 25, may have various configurations other than those in FIG. 24. Specifically, the ultrasonic sensor 54 may also sense the lateral sides of the vehicle 100, and the LiDAR 53 may sense the rear of the vehicle 100. Further, the installation positions of each sensor are not limited to the respective examples described above. Further, the number of each sensor may be one or plural.

### (Conclusion)

While some embodiments of the present disclosure have been described, these embodiments have been presented as examples and are not intended to limit the scope of the disclosure. These embodiments can be implemented in a variety of other forms, and various omissions, substitutions, changes, and combinations can be made without departing from the gist of the disclosure. These embodiments and the modifications thereof fall within the scope and gist of the disclosure, as well as within the scope of the disclosure described in the claims and equivalents thereof.

Further, the effects of the present disclosure described herein are merely exemplary, and there may be other effects.

It is to be noted that the present disclosure can also employ the following configurations.

### [Item 1] (Embodiments 1 to 9)

A radar apparatus including:
a substrate having an antenna structure in which a radiating portion for a radio wave is provided on a first surface;
a radome disposed to face the first surface of the substrate; and
a radio wave absorbing member disposed between the substrate and the radome, having an opening formed in a portion corresponding to the radiating portion, and including an insulator configured to absorb a radio wave.

### [Item 2] (Embodiments 1 to 9)

The radar apparatus according to Item 1, in which a thickness of a portion other than a portion facing the radiating portion of the radome is less than half a waveguide wavelength of a radio wave propagating within the radome.

### [Item 3] (Embodiments 1 to 9)

The radar apparatus according to Item 1 or 2, in which a thickness of a portion facing the radiating portion of the radome includes an integer multiple of half a waveguide wavelength of a radio wave propagating within the radome.

### [Item 4] (Embodiments 1 to 9)

The radar apparatus according to any one of Items 1 to 3, in which a thickness of the radio wave absorbing member includes a thickness with which an intensity of a radio wave leaking out from the radio wave absorbing member is equal to or less than a predetermined threshold.

### [Item 5] (Embodiments 1 to 9)

The radar apparatus according to any one of Items 1 to 4, in which
the radiating portion is provided to protrude on the first surface of the substrate,
a portion facing the radiating portion of the radome is provided to protrude toward the first surface of the substrate, and
the radiating portion and the portion facing the radiating portion of the radome are fitted into the opening of the radio wave absorbing member.

### [Item 6] (Embodiments 1 to 9)

The radar apparatus according to any one of Items 1 to 5, in which the radio wave absorbing member and the radome are disposed in contact with each other.

### [Item 7] (Embodiments 2 and 3)

The radar apparatus according to any one of Items 1 to 6, in which a recessed portion or a protruding portion is formed on the first surface of the radome.

### [Item 8] (Embodiments 4 and 5)

The radar apparatus according to any one of Items 1 to 6, in which the radio wave absorbing member is disposed at a periphery of the radiating portion.

### [Item 9] (Embodiments 4 and 5)

The radar apparatus according to Item 8, in which the radio wave absorbing member is disposed in one or multiple ring shapes at the periphery of the radiating portion.

### [Item 10] (Embodiments 4 and 5)

The radar apparatus according to Item 9, in which a cushioning member is disposed between the substrate and the radome, except in a portion in which the radio wave absorbing member is disposed.

### [Item 11] (Embodiments 6 and 7)

The radar apparatus according to any one of Items 1 to 9, in which the radio wave absorbing member includes multiple layers of radio wave absorbing members with different materials.

### [Item 12] (Embodiment 7)

The radar apparatus according to Item 11, in which one of the multiple layers of radio wave absorbing members with different materials includes an air layer.

### [Item 13] (Embodiment 8)

The radar apparatus according to any one of Items 1 to 12, in which the multiple radiating portions are provided on the first surface of the substrate.

### [Item 14] (Embodiments 1 to 9)

The radar apparatus according to any one of Items 1 to 13, in which the insulator included in the radio wave absorbing member includes polyethylene carbonate.

### [Item 15] (Modification)

The radar apparatus according to any one of Items 1 to 14, in which the antenna structure includes any one of a slot antenna, a microstrip antenna, or a horn antenna.

### [Item 16] (Modification)

The radar apparatus according to any one of Items 1 to 15, in which a frequency selective surface and a metasurface are disposed on the first surface of the radome.

### [Item 17] (Embodiments 1 to 9)

The radar apparatus according to any one of Items 1 to 16, in which the radio wave radiated from the radiating portion includes a millimeter wave.

### [Item 18] (Embodiments 1 to 9)

The radar apparatus according to any one of Items 1 to 17, in which the radar apparatus includes an on-vehicle radar apparatus.

### [Item 19]

The radar apparatus according to any one of Items 1 to 18, in which the radiating portion includes a space provided on the first surface of the substrate.

### [Item 20] (Embodiments 1 to 9)

The radar apparatus according to Item 1, in which the substrate includes a metal member.

### [Item 21] (Embodiment 9)

The radar apparatus according to any one of Items 1 to 20, in which a feed line configured to feed the antenna structure is provided on a second surface opposite to the first surface of the substrate.

### [Item 22] (Embodiment 9)

The radar apparatus according to Item 20, in which an electronic component is disposed on the second surface of the substrate.

### [Item 23] (Embodiment 9)

The radar apparatus according to Item 21, in which no electronic component is disposed on the first surface of the substrate.

### [Item 24] (Embodiment 9)

The radar apparatus according to Item 21, in which a heat dissipation member is provided to face the second surface of the substrate.

### [Item 25]

An on-vehicle sensing system including:
a radar apparatus including
   a substrate having an antenna structure in which a radiating portion for a radio wave is provided on a first surface,
   a radome disposed to face the first surface of the substrate, and
   a radio wave absorbing member disposed between the substrate and the radome, having an opening formed in a portion corresponding to the radiating portion, and including an insulator configured to absorb a radio wave;
an object recognition processing apparatus configured to perform object recognition processing on the basis of output of the radar apparatus; and
a vehicle control apparatus configured to control a vehicle on the basis of a recognition result of the object recognition processing apparatus.

### [Reference Signs List]

1: Antenna
2: Metal member (substrate)
2a: First surface
2b: Second surface
3: Radome
3a: First surface
3b: Second surface
4: Radio wave absorbing member
4a: First surface
4c: Opening
5: Radiating portion
5a: First surface
6: Circuit board
11: Vehicle control system (vehicle sensing system)
21: Vehicle control ECU (Electronic Control Unit)
22: Communication unit
23: Map information accumulation unit
24: Position information acquisition unit
25: External recognition sensor
26: In-vehicle sensor
27: Vehicle sensor
28: Storage unit
29: Travel assistance and automated driving control unit
30: Driver monitoring system (DMS)
31: Human machine interface (HMI)
32: Vehicle control unit
41: Communication network
51: Camera
52: Radar
53: LiDAR
54: Ultrasonic sensor
61: Analysis unit
62: Action planning unit
63: Operation control unit
71: Self-position estimation unit
72: Sensor fusion unit
73: Recognition unit
81: Steering control unit
82: Brake control unit
83: Drive control unit
84: Body control unit
85: Light control unit
86: Horn control unit
100: Vehicle
201: Antenna
203: Radome
203a: First surface
203c: Recessed portion
301: Antenna
303: Radome
303a: First surface
303d: Protruding portion
401: Antenna
404: Radio wave absorbing member
404c: Opening
407: Cushioning member
501: Antenna
504: Radio wave absorbing member
507: Cushioning member
601: Antenna
604: Radio wave absorbing member
604a: Radio wave absorbing member
604b: Radio wave absorbing member
701: Antenna
704: Radio wave absorbing member
704a: Radio wave absorbing member
704b: Air layer or cushioning member
801: Antenna
802: Metal member
803: Radome
804: Radio wave absorbing member
805: Radiating portion
801B: Antenna
805B: Radiating portion
801B: Antenna
805B: Radiating portion
901: Antenna
902: Dielectric substrate (substrate)
902a: First surface
902b: Second surface
903: Radome
904: Radio wave absorbing member
905: Radiating portion
906: Circuit board
908: Feed portion
909a: Ground plate
909b: Ground plate
909c: Ground plate
910: Feed line
911: Power supply circuit
912: Signal line
912a: End portion
913: Waveguide
914a: Via
914b: Via
915: Opening portion
916: Opening portion
920: Casing
921: Heat dissipation member
1201: Antenna
1202: Metal member
1203: Radome
1203a: First surface
1205: Radiating portion
1206: Substrate
L1: Layer
L2: Layer
L3: Layer
L4: Layer
L5: Layer
L6: Layer
L7: Layer

## Claims

1. A radar apparatus comprising:
a substrate having an antenna structure in which a radiating portion for a radio wave is provided on a first surface;
a radome disposed to face the first surface of the substrate; and
a radio wave absorbing member disposed between the substrate and the radome, having an opening formed in a portion corresponding to the radiating portion, and including an insulator configured to absorb a radio wave.

2. The radar apparatus according to claim 1, wherein a thickness of a portion other than a portion facing the radiating portion of the radome is less than half a waveguide wavelength of a radio wave propagating within the radome.

3. The radar apparatus according to claim 1, wherein a thickness of a portion facing the radiating portion of the radome includes an integer multiple of half a waveguide wavelength of a radio wave propagating within the radome.

4. The radar apparatus according to claim 1, wherein a thickness of the radio wave absorbing member includes a thickness with which an intensity of a radio wave leaking out from the radio wave absorbing member is equal to or less than a predetermined threshold.

5. The radar apparatus according to claim 1, wherein
the radiating portion is provided to protrude on the first surface of the substrate,
a portion facing the radiating portion of the radome is provided to protrude toward the first surface of the substrate, and
the radiating portion and the portion facing the radiating portion of the radome are fitted into the opening of the radio wave absorbing member.

6. The radar apparatus according to claim 1, wherein the radio wave absorbing member and the radome are disposed in contact with each other.

7. The radar apparatus according to claim 1, wherein a recessed portion or a protruding portion is formed on the first surface of the radome.

8. The radar apparatus according to claim 1, wherein the radio wave absorbing member is disposed at a periphery of the radiating portion.

9. The radar apparatus according to claim 8, wherein the radio wave absorbing member is disposed in one or multiple ring shapes at the periphery of the radiating portion.

10. The radar apparatus according to claim 9, wherein a cushioning member is disposed between the substrate and the radome, except in a portion in which the radio wave absorbing member is disposed.

11. The radar apparatus according to claim 1, wherein the radio wave absorbing member includes multiple layers of radio wave absorbing members with different materials.

12. The radar apparatus according to claim 11, wherein one of the multiple layers of radio wave absorbing members with different materials includes an air layer.

13. The radar apparatus according to claim 1, wherein the multiple radiating portions are provided on the first surface of the substrate.

14. The radar apparatus according to claim 1, wherein the insulator included in the radio wave absorbing member includes polyethylene carbonate.

15. The radar apparatus according to claim 1, wherein the antenna structure includes any one of a slot antenna, a microstrip antenna, or a horn antenna.

16. The radar apparatus according to claim 1, wherein a frequency selective surface and a metasurface are disposed on the first surface of the radome.

17. The radar apparatus according to claim 1, wherein the radio wave radiated from the radiating portion includes a millimeter wave.

18. The radar apparatus according to claim 1, wherein the radar apparatus includes an on-vehicle radar apparatus.

19. The radar apparatus according to claim 1, wherein the radiating portion includes a space provided on the first surface of the substrate.

20. The radar apparatus according to claim 1, wherein the substrate includes a metal member.

21. The radar apparatus according to claim 1, wherein a feed line configured to feed the antenna structure is provided on a second surface opposite to the first surface of the substrate.

22. The radar apparatus according to claim 21, wherein an electronic component is disposed on the second surface of the substrate.

23. The radar apparatus according to claim 21, wherein no electronic component is disposed on the first surface of the substrate.

24. The radar apparatus according to claim 20, wherein a heat dissipation member is provided to face the second surface of the substrate.

25. An on-vehicle sensing system comprising:
a radar apparatus including
a substrate having an antenna structure in which a radiating portion for a radio wave is provided on a first surface,
a radome disposed to face the first surface of the substrate, and
a radio wave absorbing member disposed between the substrate and the radome, having an opening formed in a portion corresponding to the radiating portion, and including an insulator configured to absorb a radio wave;
an object recognition processing apparatus configured to perform object recognition processing on a basis of output of the radar apparatus; and
a vehicle control apparatus configured to control a vehicle on a basis of a recognition result of the object recognition processing apparatus.
